# EUROPÄISCHE PATENTSCHRIFT

(11) **EP 4 095 164 B1**
(45) Veröffentlichungstag und Bekanntmachung des Hinweises auf die Patenterteilung: **15.11.2023**
(21) Anmeldenummer: 22174781.9
(22) Anmeldetag: 23.05.2022
(51) Int. Cl.: C08C 19/06, C08C 19/40, C08G 59/02, C08G 59/14, C08G 59/16, C08G 59/34, C08G 63/08, C08G 65/26

(54) **UNIVERSELLER HAFTVERMITTLER AUF BASIS VON ORGANOFUNKTIONELL MODIFIZIERTEN POLYBUTADIENEN**
UNIVERSAL ADHESION PROMOTERS BASED ON ORGANOFUNCTIONALLY MODIFIED POLYBUTADIENES
PROMOTEUR D'ADHÉRENCE UNIVERSEL À BASE DE POLYBUTADIÈNES MODIFIÉS DE MANIÈRE ORGANO-FONCTIONNELLE

(30) Priorität: 27.05.2021 EP 21176162
(43) Veröffentlichungstag der Anmeldung: 30.11.2022
(73) Patentinhaber: Evonik Operations GmbH, 45128 Essen (DE)
(72) Erfinder: Blüm, Jana, 45128 Essen (DE); Fiedel, Michael, 45239 Essen (DE); Halbhuber, Annett, 47799 Krefeld (DE); Redeker, Stefanie, 45527 Hattingen (DE); Schubert, Frank, 47506 Neukirchen-Vluyn (DE); Otto, Sarah, 45138 Essen (DE)
(74) Vertreter: Evonik Patent Association

(56) Entgegenhaltungen:
- CN-A- 104 231 996
- QING GAO ET AL: "Facile Synthesis of Amphiphilic Heterografted Copolymers with Crystalline and Amorphous Side Chains", MACROMOLECULAR CHEMISTRY AND PHYSICS,, Bd. 214, Nr. 15, 1. Januar 2013 (2013-01-01), Seiten 1677-1687, XP002799119, DOI: 10.1002/MACP.201300255

## Beschreibung

Die vorliegende Erfindung betrifft einen universellen Haftvermittler enthaltend einer Verbindung auf Basis von organofunktionell modifizierten Polybutadienen.

Die modernen Materialwissenschaften bringen im stetig schneller werdenden Innovationsverlauf eine immer größere Anzahl an Composit- und Hybridwerkstoffen sowie neue Beschichtungsmassen hervor. Daraus leitet sich ein großer Bedarf an innovativen Haftungsvermittlern ab, deren Aufgabe es ist, zum einen eine Affinität zu eben diesen neuen Oberflächen aufzubauen und gleichsam auch eine exzellente Kompatibilität mit der zu applizierenden Beschichtungsmatrix aufzuweisen, um so einen guten Haftungsverbund der Materialien zu erzeugen.

Composit- und Hybridwerkstoffe sowie deren Oberfläche, Untergrund, Substrat werden hierbei als Synonyme verwendet.

Die Haftung kommt überwiegend zustande durch Bindungskräfte zwischen Molekülen des Lackfilms bzw. der Beschichtungsmasse und dem Untergrund. Falls die Haftung nicht ausreichend ist, gibt es verschiedene Möglichkeiten, diese Grenzschicht zu bearbeiten oder zu beeinflussen. Man kann die Oberfläche des Substrates/Untergrund durch Schleifen, Beflammen oder Corona-Behandlung verändern, eine weitere Schicht ("Haftprimer") zwischen Substrat und Lackfilm einbringen oder im Lackfilm durch Zugabe spezieller Haftharze oder Haftvermittler die Haftung erzeugen.

Haftvermittler sind Bestandteile der Lackschicht und müssen Gruppierungen aufweisen, die einerseits starke Wechselwirkungen mit dem Substrat eingehen können und parallel dazu für eine gute Einbindung in die Lackmatrix sorgen, ohne andere lacktechnische Eigenschaften negativ zu beeinflussen.

Die im Stand der Technik bekannten Haftpromotoren lassen sich unterteilen in funktionalisierte Polymere und Organika sowie Coupling Agents im weiteren Sinne. Während bei den funktionalisierten Polymeren neben funktionalisiertem Polyethylen/Polypropylen, funktionalisierten Styrol-Butadien-Kautschuken und organische Harze zu nennen sind, so sind es bei den funktionalisierten Organika im Wesentlich Aminverbindungen und Acrylate. Die Gruppe der Coupling Agents besteht hauptsächlich aus organomodifizierten Silanen, Zirkonaten und Titanaten.

Haftungsvermittlern, Haftvermittler und Haftpromotoren werden hierbei als Synonyme verwendet.

EP3184568A1 beschreibt eine Klebstoffformulierung enthaltend Acrylat-terminierte Urethan-Polybutadiene, welche aus der Umsetzung von Monoaddukten aus reaktiven olefinischen Verbindungen, Diisoyanaten und hydroxyterminierten Polybutadienen herstellbar sind.

Die WO 2014/001300 offenbart Polybutadiene mit endständigen Epoxygruppen, die als Bindemittel in Klebmassen für Automobilanwendungen eingesetzt werden.

Aus dem Stand der Technik sind auch Haftvermittler aus nicht-modifizierten Polybutadienen bekannt. Diese zeigen bereits eine gute Haftleistung, jedoch haben sie den Nachteil, dass ihre Kompatibilität nicht bzw. nur sehr eingeschränkt eingestellt werden kann.

CN104231996A offenbart eine Klebstoffzusammensetzung auf Basis von einem Polyether-Polybutadien-(Meth)acrylat Copolymer.

Es ist daher wünschenswert, einen Haftvermittler bereitzustellen, der eine breite Einstellbarkeit der Haftleistung und Verträglichkeit ermöglicht, sowie zumindest einen Nachteil des Standes der Technik überwindet.

Aufgabe der vorliegenden Erfindung war es daher, einen Haftvermittler bereitzustellen, der auf Oberflächen eine gute Haftung zeigt, gleichsam aber eine Modifikation trägt, mit deren Hilfe es möglich ist, die Kompatibilität entsprechend den Untergründen einzustellen.

Verträglichkeit und Kompatibilität werden hier als Synonyme verstanden.

Zur Lösung der Aufgabe wird daher ein universeller Haftvermittler enthaltend eine Verbindung auf Basis von Polybutadien mit mindestens einer Wiederholungseinheit ausgewählt aus der Gruppe bestehend aus den zweibindigen Resten 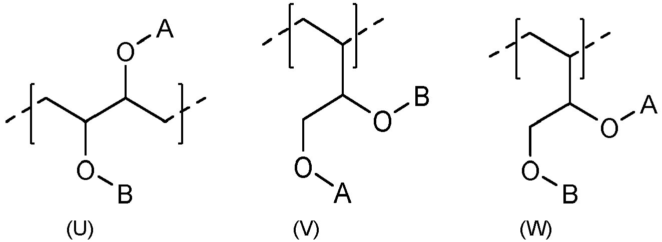 wobei
- A: jeweils unabhängig voneinander ein einbindiger organischer Rest oder ein Wasserstoffrest ist,
bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
- B: jeweils unabhängig voneinander ausgewählt ist aus der Gruppe bestehend aus Resten der Formel (4a), 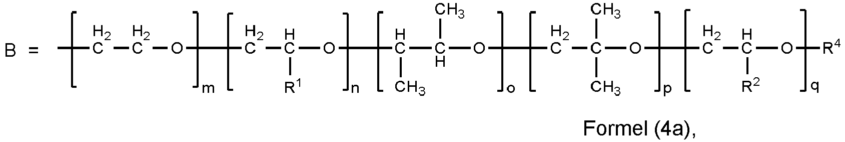 bevorzugt jeweils unabhängig voneinander ausgewählt ist aus der Gruppe bestehend aus Resten der Formel (4b), 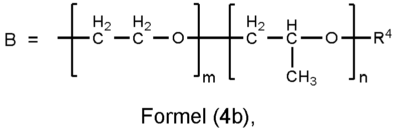 besonders bevorzugt jeweils unabhängig voneinander ausgewählt ist aus der Gruppe bestehend aus Resten der Formel (4c), 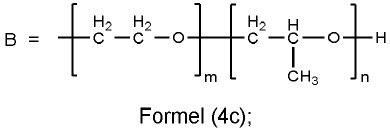
- R¹: jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
- R²: ein Rest der Formel -CH₂-O-R³ ist;
- R³: jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;
- R⁴: jeweils unabhängig voneinander ein einbindiger organischer Rest mit 1 bis 18 Kohlenstoffatomen oder Wasserstoff, bevorzugt Wasserstoff ist;
und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
dass Rest B mindestens eine Wiederholungseinheit gemäß 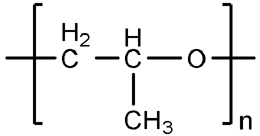 aufweist;
   und jede Permutation der Wiederholungseinheiten im Rest B mitumfasst ist,
   vorgeschlagen.

Haftvermittler ist auch bekannt unter der Bezeichnung Haftpromotor, Haftadditiv und/oder Haftharz.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Alle Formeln beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden als Mittelwerte der möglichen statistischen Verteilung der tatsächlichen vorhandenen Strukturen und/oder deren Mischungen verstanden. Die verschiedenen Fragmente beziehungsweise Wiederholungseinheiten der in den Formeln beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst. Werden also im Rahmen der vorliegenden Erfindung Verbindungen, wie z.B. Polybutadiene (A), epoxyfunktionelle Polybutadiene (C), hydroxyfunktionelle Polybutadiene (E), polyethermodifizierte Polybutadiene (G) oder polyethermodifizierte Polybutadiene (K) enthaltend endverkappte Polyetherreste beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Erstaunlicherweise wurde festgestellt, dass der erfindungsgemäßer Haftvermittler eine Verbindung aufweist, die vorteilhafterweise nicht auf Silikon basiert ist und zudem die Möglichkeit gibt, die Haftleistung und die Verträglichkeit einzustellen. Einerseits konnte die Vielfalt des Polybutadiens genutzt werden; andererseits konnte durch Kombinationen bestimmter topologisch unterschiedlichen Polyethern und deren Funktionalitätsdichte am Polybutadiengrundkörper die Verträglichkeit verbessert werden.

Die Erfinder konnten zudem feststellen, dass der erfindungsgemäße Haftvermittler auf verschiedenen Substraten gut haftet und zudem eine bessere Verträglichkeit aufweist als die eines aus dem Stand der Technik bekannten Haftvermittlers.

Überraschenderweise wurde auch festgestellt, dass zumindest ein Rest B mindestens eine Wiederholungseinheit gemäß 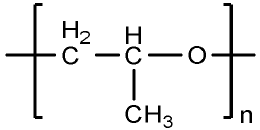 aufweist, um sowohl eine zufriedenstellende haftende Wirkung als auch eine zufriedenstellende Kompatibilität des erfindungsgemäßen Haftvermittlers zu erhalten.

Vorzugsweise enthält der erfindungsgemäße Haftvermittler eine Verbindung mit m, n, o, p und q, jeweils unabhängig voneinander 0 bis 100, bevorzugt 0 bis 70, besonders bevorzugt 0 bis 50, mit der Maßgabe, dass die Summe aus m, n, o, p und q größer als 1, bevorzugt größer als 5, besonders bevorzugt größer als 10 ist.

Bevorzugt weist die Verbindung für den erfindungsgemäßen Haftmittler eine zahlenmittlere Molmasse Mₙ des Polybutadienteils von 200 g/mol bis 20000 g/mol, bevorzugt von 500 g/mol bis 10000 g/mol, besonders bevorzugt von 700 g/mol bis 5000 g/mol auf.

Der Polybutadienteil der Verbindung weist vorzugsweise 0 % bis 80 %, bevorzugt 0 % bis 30 %, besonders bevorzugt 0 % bis 10 %, ganz besonders bevorzugt 0 % bis 5 % der enthaltenen Doppelbindungen 1 ,2-Vinyl-Doppelbindungen aufweist und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen, auf.

Vorzugsweise weist der erfindungsgemäße Haftvermittler eine Verbindung auf Basis von linearen Polybutadienen auf.

Vorzugsweise weist die Verbindung keine seitständigen (kammständigen) Polybutadiene auf.

Vorzugsweise weist die Verbindung ausschließlich seitständige (kammständige) Wiederholungseinheiten (U), (V) und/oder (W) auf.

Vorzugsweise beträgt die mittlere Molmasse des Rests B von 100 g/mol bis 10.000 g/mol, bevorzugt von 200 g/mol bis 7.500 g/mol, besonders bevorzugt von 400 g/mol bis 5.000 g/mol.

Die Reste R¹, R², R³ und R⁴ können dabei jeweils unabhängig voneinander linear oder verzweigt, gesättigt oder ungesättigt, aliphatisch oder aromatisch, substituiert oder unsubstituiert sein.

Die allgemeine Schreibweise 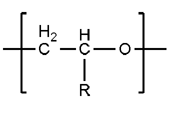 mit R = R¹ oder R² in Formel (4a) bzw. R = CH₃ in den Formeln (4b) und (4c) steht dabei sowohl für eine Einheit der Formel 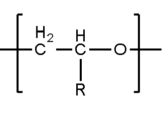 als auch eine für eine Einheit der Formel 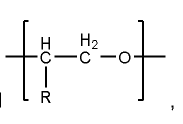 , vorzugweise aber für eine Einheit der Formel 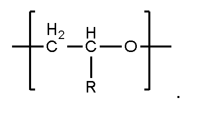 . Die allgemeine Schreibweise 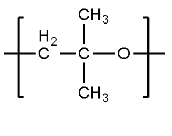 in Formel (4a) steht dabei sowohl für eine Einheit der Formel 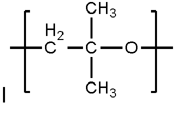 als auch eine für eine Einheit der Formel 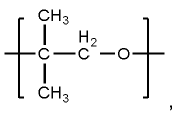 , vorzugweise aber für eine Einheit der Formel 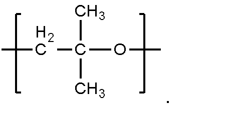 .

Es ist weiterhin bevorzugt, dass der Rest R⁴ jeweils unabhängig voneinander ausgewählt ist aus der Gruppe bestehend aus einwertigen Kohlenwasserstoffresten mit 1 bis 18 Kohlenstoffatomen, Acylresten -C(=O)R⁵, Urethanresten -C(=O)NH-R⁶, Carbonatresten -C(=O)O-R⁷ und Wasserstoff; weiter bevorzugt ist R⁴ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten - C(=O)R⁵, Urethanresten -C(=O)NH-R⁶, Carbonatresten -C(=O)O-R⁷ und Wasserstoff; besonders bevorzugt ist R⁴ Wasserstoff.

R⁵ ist jeweils unabhängig voneinander ein Alkyl- oder ein Alkenylrest mit 1 bis 18 Kohlenstoffatomen, bevorzugt mit 1 bis 10 Kohlenstoffatomen, besonders bevorzugt ein Methylrest.

R⁶ ist jeweils unabhängig voneinander ein Alkyl- oder ein Arylrest mit 1 bis 18 Kohlenstoffatomen, bevorzugt mit 6 bis 18 C-Atomen.

R⁷ ist jeweils unabhängig voneinander ein Alkylrest mit 1 bis 18 Kohlenstoffatomen, bevorzugt mit 1 bis 2 Kohlenstoffatomen.

Die Verbindung weist vorzugsweise auch Wiederholungseinheiten (Y) und (Z) gemäß 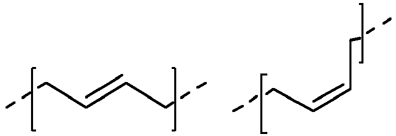 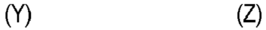 auf.

Es ist dabei bevorzugt, dass die Summe aller Wiederholungseinheiten (U), (V) und (W) dividiert durch die Summe aller Wiederholungseinheiten (U), (V), (W), (X), (Y) und (Z) des mindestens einen polyethermodifizierten Polybutadiens (G) bzw. (K) von >0 % bis 70 %, bevorzugt von 1 % bis 50 %, weiter bevorzugt von 2 % bis 40 %, noch weiter bevorzugt von 3 % bis 30 %, besonders bevorzugt von 4 % bis 20 % beträgt.

Das bedeutet, dass >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % der Gesamtheit der Wiederholungseinheiten (U), (V), (W), (X), (Y) und (Z) polyethermodifiziert sind.

Die zahlenmittlere Molmasse Mₙ, gewichtsmittlere Molmasse M_{w} und Polydispersität des Polybutadienteils des polyethermodifizierten Polybutadiens (G) bzw. (K) sind beliebig. Unter dem Polybutadienteil wird dabei der Teil des polyethermodifizierten Polybutadiens (G) bzw. (K) verstanden, der vom verfahrensgemäß eingesetzten Polybutadien (A) stammt.

Es ist bevorzugt, dass die zahlenmittlere Molmasse Mₙ des Polybutadienteils des polyethermodifizierten Polybutadien (G) bzw. (K) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des Polybutadienteils des polyethermodifizierten Polybutadiens (G) bzw. (K) von 2100 g/mol bis 20.000 g/mol, besonders bevorzugt von 2.200 g/mol bis 10.000 g/mol, ganz besonders bevorzugt von 2.300 g/mol bis 5.000 g/mol beträgt.

Die zahlenmittlere Molmasse Mₙ des Polybutadienteils ist dabei als die zahlenmittlere Molmasse Mₙ des zugrundeliegenden Polybutadiens (A) definiert.

Es ist weiterhin bevorzugt, dass das polyethermodifizierte Polybutadien (G) bzw. (K) im Zahlenmittel 5 bis 360, besonders bevorzugt 10 bis 180, ganz besonders bevorzugt 15 bis 90 Wiederholungseinheiten aufweist, wobei die Wiederholungseinheiten aus der Gruppe bestehend aus (U), (V), (W), (X), (Y) und (Z) ausgewählt sind.

Alternativ ist es bevorzugt, dass das polyethermodifizierte Polybutadien (G) bzw. (K) im Zahlenmittel 35 bis 360, besonders bevorzugt 40 bis 180, ganz besonders bevorzugt 45 bis 90 Wiederholungseinheiten aufweist, wobei die Wiederholungseinheiten aus der Gruppe bestehend aus (U), (V), (W), (X), (Y) und (Z) ausgewählt sind.

Es ist weiterhin bevorzugt, dass die polyethermodifizierten Polybutadiene (G) bzw. (K) dadurch gekennzeichnet sind, dass 0 % bis 80 %, bevorzugt 0 % bis 30 %, besonders bevorzugt 0 % bis 10% und ganz besonders bevorzugt 0% bis 5 % der enthaltenen Doppelbindungen 1,2-Vinyl-Doppelbindungen sind und 20% bis 100%, bevorzugt 70 % bis 100 %, besonders bevorzugt 90 % bis 100% und ganz besonders bevorzugt 95 % bis 100 % der enthaltenen Doppelbindungen 1,4-Doppelbindungen sind.

Bevorzugt im Sinne der Erfindung sind daher Verbindungen der Formel (5) mit einem Gehalt von 0 % bis 80 % 1,2-Vinyl-Doppelbindungen (Index a) und 20 % bis 100 % 1,4-Doppelbindungen (Summe Indizes b und c), bevorzugt mit 0 % bis 30 % 1,2-Vinyl-Doppelbindungen und 70 % bis 100 % 1,4-Doppelbindungen, besonders bevorzugt mit 0 % bis 10 % 1,2-Vinyl-Doppelbindungen und 90 % bis 100 % 1,4-Doppelbindungen und ganz besonders bevorzugt 0 % bis 5 % 1,2-Vinyl-Doppelbindungen und 95 % bis 100 % 1,4-Doppelbindungen bezogen auf die Gesamtzahl der Doppelbindungen enthaltenden Wiederholeinheiten (Summe a + b + c). Das Verhältnis von 1,4-trans-Doppelbindungen (Index b) und 1,4-cis-Doppelbindungen (Index c) ist beliebig.

Besonders bevorzugt sind Verbindungen der Formel (5) mit einem Gehalt von >95 % an Wiederholeinheiten mit Index d bezogen auf die Summe der Wiederholeinheiten d + e + f. Das Verhältnis der Wiederholeinheiten e und f zueinander ist beliebig.

Ganz besonders bevorzugt sind solche polyethermodifizierten Polybutadiene (G) bzw. (K), die sich von den oben beschriebenen Polybutadienen Polyvest^{®} 110 und Polyvest^{®} 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 100 g/mol bis 20000 g/mol, bevorzugt von 200 g/mol bis 15000 g/mol, besonders bevorzugt von 400 g/mol bis 10000 g/mol beträgt. Die mittlere Molmasse der Reste B kann aus der Einwaage der eingesetzten Monomere bezogen auf die Anzahl der OH-Gruppen des eingesetzten hydroxyfunktionellen Polybutadiens (E) berechnet werden. Werden also beispielsweise 40 g Ethylenoxid eingesetzt und weist die Menge des eingesetzten hydroxyfunktionellen Polybutadiens (E) 0,05 mol OH-Gruppen auf, so beträgt die mittlere Molmasse des Rests B 800 g/mol.

Die polyethermodifizierten Polybutadiene (G) bzw. (K) sind je nach Zusammensetzung und Molmasse flüssig, pastös oder fest.

Die zahlenmittlere Molmasse Mₙ der polyethermodifizierten Polybutadiene (G) bzw. (K) beträgt bevorzugt von 1.000 g/mol bis 6.000 g/mol, weiter bevorzugt von 1.500 g/mol bis 5.000 g/mol, besonders bevorzugt von 2.000 g/mol bis 4.000 g/mol.

Ihre Polydispersität ist in weiten Bereichen variabel. Die Polydispersität des mindestens einen polyethermodifizierten Polybutadiens (G) bzw. (K) liegt nach GPC-Methode gegen PPG-Standard bevorzugt bei M_{w}/Mₙ von 1,5 bis 10, weiter bevorzugt zwischen 2 und 9, besonders bevorzugt zwischen 3 und 8.

Zugänge zu der Verbindung auf Basis von Polybutadien mit mindestens einer Wiederholungseinheit ausgewählt aus der Gruppe bestehend aus den zweibindigen Resten (U), (V) und/oder (W), wie oben beschrieben, ist der bisher unveröffentlichten europäischen Patentanmeldung EP 19212066.5 bzw. PCT/EP2020/083013 zu entnehmen.

Die bisher unveröffentlichte europäische Patentanmeldung EP 19212066.5 bzw. PCT/EP2020/083013 widmet sich der Herstellung von Verbindungen auf Basis von Polybutadienen, die als Haftvermittler geeignet sind. Darin wird ein Verfahren, das folgende Schritte umfasst, beschrieben:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Überraschenderweise wurde darin offenbart, dass sich Polybutadiene mit hohem Anteil an 1,4-Einheiten und geringem Gehalt an vinylischen 1,2- Einheiten nach der Epoxidierung mit Wasserstoffperoxid leicht unter sauer katalysierter Ringöffnung mit OH-funktionellen Verbindungen in seitständig OH-funktionelle Polybutadiene (Polybutadienole) umwandeln und anschließend mit Alkylenoxiden alkoxylieren lassen.

Es ist bevorzugt, dass das Verfahren außerdem mindestens einen der folgenden optionale Schritte umfasst:
d) Umsetzung des mindestens einen polyethermodifizierten Polybutadiens (G) mit mindestens einem Endverkappungsreagenz (H) zu mindestens einem polyethermodifizierten Polybutadien (K) enthaltend endverkappte Polyetherreste;
e) Farbaufhellung des mindestens einen polyethermodifizierten Polybutadiens (G) bzw. (K).

Vorzugsweise ist das Verfahren weiterhin dadurch gekennzeichnet, dass

| | |
|---|---|
| im Schritt a) | >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) mit Hilfe von Perameisensäure, welche *in situ* aus Ameisensäure und HzOz erzeugt wird, epoxidiert werden; |
| im Schritt b) | an die Epoxidgruppen des mindestens einen epoxyfunktionellen Polybutadiens (C) unter Ringöffnung ein oder mehrere kurzkettige Alkohole mit 1 bis 6 Kohlenstoffatomen, insbesondere Isobutanol, addiert werden, wobei bevorzugt ein oder mehrere saure Katalysatoren, insbesondere Trifluormethansulfonsäure, eingesetzt werden; |
| im Schritt c) | an die entstandenen seitständigen OH-Gruppen des mindestens einen hydroxyfunktionellen Polybutadiens (E) eine oder mehrere epoxyfunktionelle Verbindungen (F) ausgewählt aus Alkylenoxiden und ggf. weiteren epoxyfunktionellen Monomeren in einer Alkoxylierungsreaktion addiert werden, wobei bevorzugt zusätzlich ein Zn/Co-Doppelmetallcyanid-Katalysator oder basische Katalysatoren wie Amine, Guanidine, Amidine, Alkalihydroxide oder Alkalialkoholate verwendet werden; |
| Im Schritt d) | optional die Umsetzung des mindestens einen polyethermodifizierten Polybutadiens (G) mit mindestens einem Endverkappungsreagenz (H), ausgewählt aus der Gruppe von Carbonsäuren, Carbonsäureanhydriden, halogenierten Kohlenwasserstoffen, Isocyanaten und Carbonaten zu mindestens einem polyethermodifizierten Polybutadien (K) enthaltend endverkappte Polyetherreste erfolgt; |
| im Schritt e) | optional die Farbaufhellung des mindestens einen polyethermodifizierten Polybutadiens (G) bzw. (K) mit Aktivkohle und/oder Wasserstoffperoxid vorgenommen wird. |

Durch das darin offenbarte Verfahren wird es erstmalig ermöglicht, lineare Polybutadiene durch eine einfache direkte Alkoxylierung an den seitständigen OH-Gruppen mit kammständigen Polyetherresten zu modifizieren. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Hydroxylfunktionalisierung einstellbar und eröffnet eine große strukturelle Vielfalt bei den hydroxyfunktionellen Polybutadienen (E).

Die erhältlichen Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen alle Polyether chemisch über eine Etherbindung an das Polybutadien angebunden. Damit unterscheiden sich die erfindungsgemäßen Verfahrensprodukte deutlich durch ihre erhöhte Reinheit von den bisher aus dem Stand der Technik bekannten Verbindungen.

Um eine Wiederholung der bevorzugten Ausgestaltungen des Herstellungsverfahrens der bisher unveröffentlichten europäischen Patentanmeldung EP 19212066.5 bzw. PCT/EP2020/083013 zu vermeiden, wird hiermit nur der Bezug zu den Überschriften der einzelnen Verfahrensschritte daraus genommen:
▪ **Zur bevorzugten Ausgestaltung von Schritt a) des erfindungsgemäßen Verfahrens**
**▪ Zur bevorzugten Ausgestaltung von Schritt b) des erfindungsgemäßen Verfahrens**
**▪ Zur bevorzugten Ausgestaltung von Schritt c) des erfindungsgemäßen Verfahrens**
▪ **DMC-Katalyse**
**▪ Basische Katalyse**
**▪ Produkte als Starter**
**▪ Optionaler Schritt d)**
**▪ Optionaler Schritt e)**
**▪ Reaktoren**

Die darin entsprechend offenbarte Beschreibung wird hiermit ausdrücklich Bezug genommen.

Wie oben bereits beschrieben, kann die Verträglichkeit des erfindungsgemäßen Haftvermittlers durch Variation und Kombination bestimmter topologisch unterschiedlichen Polyethern und deren Funktionalitätsdichte am Polybutadiengrundkörper eingestellt werden. Aus diesem Grund wird vorzugsweise hier der Schritt c) detailliert beschrieben:
Im Schritt c) des erfindungsgemäßen Verfahrens erfolgt die Umsetzung des mindestens einen hydroxyfunktionellen Polybutadiens (E) mit mindestens einer epoxyfunktionellen Verbindung (F) zu mindestens einem polyethermodifizierten Polybutadien (G).

Das mindestens eine hydroxyfunktionelle Polybutadien (E) aus Schritt b) dient im Schritt c) als Startverbindung für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die OH-Gruppen des mindestens einen hydroxyfunktionellen Polybutadiens (E) addiert. Dies führt zur Bildung der erfindungsgemäßen Polybutadiene mit kammständigen (seitständigen) Polyetherketten, also zur Bildung des mindestens einen polyethermodifizierten Polybutadiens (G). Vorzugsweise ist das polyethermodifizierte Polybutadien (G) ein lineares Polybutadien, das kammständig (seitständig) mit Polyetherresten modifiziert ist. Es ist also bevorzugt, dass das polyethermodifizierte Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxyfunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugt aus der Gruppe der Alkylenoxide mit 2 bis 18 Kohlenstoffatomen, weiter bevorzugt aus der Gruppe der Alkylenoxide mit 2 bis 8 Kohlenstoffatomen, besonders bevorzugt aus der Gruppe bestehend aus Ethylenoxid, Propylenoxid, 1-Butylenoxid, cis-2-Butylenoxid, trans-2-Butylenoxid, Isobutylenoxid und Styroloxid ausgewählt ist; und/oder dass die mindestens eine im Schritt c) eingesetzte epoxyfunktionelle Verbindung aus der Gruppe der Glycidylverbindungen, bevorzugt aus der Gruppe der monofunktionellen Glycidylverbindungen, besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C12/C14-Fettalkoholglycidylether und C13/C15-Fettalkoholglycidylether ausgewählt ist.

Alternativ oder zusätzlich können zu den genannten Alkylenoxiden oder Glycidylverbindungen auch cyclische Anhydride, Lactone, di-Lactide oder cyclische Carbonate als Monomere oder Comonomere mit den bereits genannten Alkylenoxiden oder Glycidylverbindungen eingesetzt werden.

Es können generell alle dem Fachmann bekannten cyclischen Anhydride, rein oder in beliebigen Mischungen, eingesetzt werden. Als gesättigte, ungesättigte oder aromatische cyclische Dicarbonsäureanhydride, können bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid. Besonders bevorzugt werden Bernsteinsäureanhydrid, Maleinsäureanhydrid, Phthalsäureanhydrid, und Hexahydrophthalsäureanhydrid eingesetzt, insbesondere Maleinsäureanhydrid und Phthalsäureanhydrid.

Als Lactone, können generell alle dem Fachmann bekannten Lactone, rein oder in beliebigen Mischungen, eingesetzt werden. Bevorzugt können Valerolactone, Caprolactone und Butyrolactone eingesetzt werden, die alle unsubstituiert oder mit organischen Resten versehen, bevorzugt Methylgruppen, substituiert sein können. Vorzugsweise können ε-Caprolacton oder δ-Valerolacton eingesetzt werden, insbesondere ε-Caprolacton.

Als cyclische Carbonate können generell alle dem Fachmann bekannten cyclischen Carbonate, zugänglich über die Insertion von CO2 in Epoxide, rein oder in beliebigen Mischungen eingesetzt werden. Bevorzugt werden Propylencarbonat und Ethylencarbonat eingesetzt.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die OH-Gruppen des mindestens einen vorgelegten hydroxyfunktionellen Polybutadiens (E) aus Schritt b) gesteuert werden.

Die erfindungsgemäß hergestellten polyethermodifizierten Polybutadiene (G) sind vorzugsweise dadurch gekennzeichnet, dass sie gemäß den Formeln (3a), (3b) und (3c) über eine Ethergruppe an das Polybutadiengerüst gebundene Reste B enthalten,

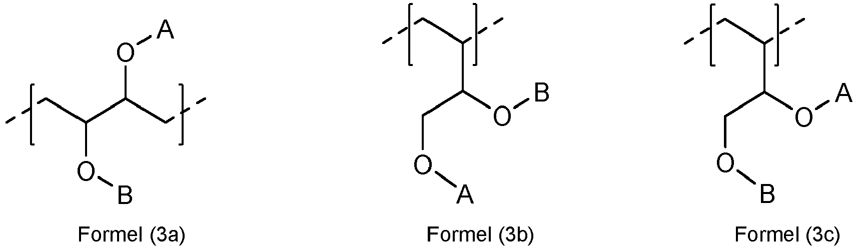

Wie oben zu Schritt b) ausgeführt wurde, stammt der Rest A in den Formeln (3a), (3b) und (3c) aus der Verbindung A-OH, also der im Schritt b) eingesetzten hydroxyfunktionellen Verbindung (D). Wie ebenfalls oben ausgeführt wurde, sind im Schritt b) zwei Fälle zu unterscheiden, nämlich A ≠ H oder A = H. Im ersten Fall, also für A ≠ H, ist der Rest A in den Formeln (3a), (3b) und (3c) identisch mit dem Rest A in den Formeln (2a), (2b) und (2c). Im zweiten Fall, also für A = H, ist der Rest A in den Formeln (3a), (3b) und (3c) jeweils unabhängig voneinander H oder ein Rest B. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Wird beispielsweise eine Carbonsäure als hydroxyfunktionelle Verbindung (D) eingesetzt, so ist A ein Acylrest. Wird jedoch Wasser als hydroxyfunktionelle Verbindung (D) eingesetzt, so ist A in den Formeln (3a), (3b) und (3c) im Falle der Umsetzung mit einer oder mehreren epoxyfunktionellen Verbindung (F) ein Rest B, im Falle der Nichtumsetzung bleibt A Wasserstoff. Es resultiert also aus jeder umgesetzten seitständigen Hydroxygruppe genau ein seitständiger Rest -O-B. Der Rest B ist wiederum aus einem oder mehreren Monomeren, vorzugsweise aus mehreren Monomeren, der mindestens einen eingesetzten epoxyfunktionellen Verbindung (F) aufgebaut.

Im Sinne der Erfindung können prinzipiell alle dem Fachmann bekannten Alkoxylierungskatalysatoren eingesetzt werden, z.B. basische Katalysatoren wie Alkalihydroxide, Alkalimetallalkoholate, Amine, Guanidine, Amidine, Phosphorverbindungen wie Triphenylphosphin, darüber hinaus saure und Lewissaure Katalysatoren wie SnCl₄, SnClz, SnF₂, BF₃ und BF₃-Komplexe, sowie Doppelmetallcyanid (DMC)-Katalysatoren.

Vor der Epoxidzufuhr, also vor der Zugabe der mindestens einen eingesetzten epoxyfunktionellen Verbindung (F), wird der mit dem Starter und Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxyfunktionelle Polybutadien (E) oder es kann auch ein bereits entsprechend dem erfindungsgemäßen Verfahren hergestelltes polyethermodifiziertes Polybutadien (G) als Starter eingesetzt werden, wie weiter unten beschrieben wird.

Ein zweiter Gegenstand der Erfindung ist die Verwendung des Haftvermittlers zur Herstellung einer Haftvermittlerzusammensetzung. Vorzugsweise weist die Haftvermittlerzusammensetzung weitere Additive oder Lösemittel auf. Diese sind dem Fachmann bekannt und können eingesetzt werden.

Dritter Gegenstand der Erfindung ist die Verwendung des erfindungsgemäßen Haftvermittlers oder der Haftvermittlerzusammensetzung zur Herstellung von Beschichtungsstoffen, wie etwa Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen, Dicht- und Klebstoffzusammensetzungen.

Vorzugsweise wird 0,1 bis 50 Gew.-%, bevorzugt 0,1 -10 Gew.-%, besonders bevorzugt 0,5 - 5 Gew.-% des Haftvermittlers eingesetzt, bezogen auf die Gesamtzusammensetzung entsprechend den jeweiligen Anwendungen, z. B. Beschichtungsstoffen, Dicht- oder Klebstoffzusammensetzungen.

Vierter Gegenstand der Erfindung ist ein Verfahren umfassend das Aufbringen einer härtbaren filmbildenden Zusammensetzung enthaltend des erfindungsgemäßen Haftvermittlers oder der Haftvermittlerzusammensetzung.

Vorzugsweise handelt es sich bei dem Substrat um Metall, Beton, Holz, und/oder ein Kompositmaterial wie z. B. Glasfaser und/oder Kohlenstofffaserverbundwerkstoff, Stahl (verschieden legiert und/oder nachbehandelt), Aluminium, mineralische Substrate wie etwa Glas, formstabile Kunststoffe und/oder Duromere.

Die erfindungsgemäßen Haftvermittler oder Haftvermittlerzusammensetzungen können vorzugsweise in 1K-Beschichtungssystemen oder 2K-Beschichtungssystemen, in Melamin-Einbrenn-Systemen, Raum- oder Hochtemperatursystemen, UV-Systemen eingesetzt werden.

Unter dem Begriff "metallische Substrate" werden folgende, jedoch nicht abschließende, Werkstoffe verstanden: Heiß und kalt gewalzter Stahl mit und ohne Nachbehandlung. Nicht Nachbehandelte Stähle werden vor dem Gebrauch durch spezielle Reiniger zum Beispiel der Firma GARDOBOND^{®} entfettet.

Als erste Schicht kann eine chemische Lösung zum Beispiel der Firma GARDOBOND^{®} Type 26 aufgetragen werden. Diese kann sowohl gespritzt (S) oder aber getaucht (T) werden. Die Nachbehandlung kann üblicherweise mit einer anorganischen Konversionsschicht basierend auf einer Phosphatierung, alkalischer Passivierung oder einer Chromatierung vorgenommen werden. Dies kann durch Feuer oder aber elektrolytische Verzinkung erfolgen. Es kann zum Beispiel eine wässrige Zinkphosphatlösung eingesetzt werden. Diese bildet eine Schicht aus tertiärem Zinkphosphat oder Zinkeisenphosphat aus.

Es kann aber auch eine Phosphatierung vorgenommen werden. Zum Beispiel wird eine wässrige Lösung mit primären Alkaliphosphaten verwendet. Diese Bleche können zum Beispiel von der Firma Q-LAB^{®} als Type R-I bezogen werden.

Anschließend wird zur Sicherstellung einer geschlossenen Schutzschicht auf dem Metall eine weitere chemische Spüllösung zur Passivierung verwendet. Üblicherweise wird zum einen VE-Wasser oder aber diverse Spüllösungen, zum Beispiel Gardolene^{®} D60, D86 oder D6800, verwendet.

Aluminium wird meistens kaltgewalzt entsprechend der Güte AIMg 1 G 18, zum Beispiel der Firma GARDOBOND^{®} Type AA 5005A oder aber der Güte AlMg0,4Si1,2 (Automobilspezifikation) der Firma GARDOBOND^{®} Type AA6016 verwendet. Hier wird die Oberfläche mit einer wässrigen Chromatierlösung mit enthaltener Chromsäure behandelt. Diese Bleche sind unter anderem erhältlich von der Firma Q-LAB^{®} als Type AL. Es kann aber auch verzinkter Stahl mit dieser Methode weiterbehandelt werden.

Unter dem Begriff "Glas" werden anorganische Silikatgläser zum Beispiel Borosilikatglas oder Kalknatronglas verstanden, die zum Beispiel als Getränkeflaschen dienen. Üblicherweise werden diese mit Etiketten versehen oder aber neuerdings auch direkt bedruckt.

Unter dem Begriff "formstabile Kunststoffe" werden folgende, jedoch nicht abschließende, Polymere verstanden: Acrylnitril-Butadien-Styrol (ABS), Polyamide (PA), Polymethylmethacrylat (PMMA), Polycarbonat (PC), Polyethylenterephthalat (PET), Polyethylen (PE), Polypropylen (PP), Polystyrol (PS), Polyetheretherketon PEEK), Polyvinylchlorid (PVC). Polypropylen (PP), Polyethylen (PE), Synthesekautschuk-Mixturen aus Ethylen- Propylen- Dien (EPDM).

Bei den 1K-Beschichtungssystemen enthält das filmbildende Polymer zum einen bevorzugt keine funktionellen Gruppen, da die Filmbildung durch physikalische Trocknung entsteht, oder aber Doppelbindungen, wenn die Trocknung durch eine Mischung aus oxidativer Härtung und physikalischer Trocknung erfolgt.

Vorzugsweise ist das filmbildende Polymer, welches rein physikalisch trocknet, ausgewählt aus der Gruppe der Acrylatpolymere, zum Beispiel von der Firma EVONIK^{®} mit dem Handelsnamen Degalan. Wird ein Polymer bevorzugt, welches zusätzlich oxidativ härtet, wird es typischerweise ausgewählt aus der Gruppe der Alkydbindemittel. Diese gehören chemisch zu den Polyestern und entstehen durch Kondensation von Alkoholen und mehrprotonigen Säuren unter Zugabe von Fettsäuren zur Modifizierung der Eigenschaften. Man unterscheidet diese nach Höhe des Ölgehaltes, welche das Trocknungsverhalten steuert. Bei einem Ölgehalt von unter 40% spricht man von einem kurzöligem Alkyd, welches lufttrocknet. Bei einem Ölgehalt zwischen 40 und 60% spricht man von einem mittelöligem Alkydharz, welches ofentrocknend ist. Bei einem Ölgehalt über 60% erhält man ein nichttrocknendes Alkyd.

Vorzugsweise wird in der erfindungsgemäßen Formulierung ein kurzöliges, lufttrocknendes Alkydharz zum Beispiel von der Firma WORLEEKyd^{®} verwendet. Die Polymerisation findet unter Einfluss von Sauerstoff über die Doppelbindungen der ungesättigten Fettsäureester statt. Besonders hervorzuheben ist hier die mehrfach ungesättigte α-Linolensäure. Zur Beschleunigung der Härtung werden üblicherweise Sikkative eingesetzt. Vorzugsweise handelt sich hierbei um Octoate. Zum Beispiel um Cobald oder aber Calciumoctoate. In der erfindungsgemäßen Formulierung wird ein Octa-Soligen^{®} Cobalt 6 und ein Octa-Soligen^{®} Calcium 10 in Kombination mit einem neuartigen Sikkativ Borchi^{®} OXY-Coat der Firma BORCHERS^{®} verwendet. Vorstellbar sind aber auch Cobaltoctoate mit den Handelsnamen Octa-Soligen^{®} Cobalt 10 oder Octa-Soligen^{®} Cobalt 12. Außerdem auch Manganoctoate unter dem Handelsnamen Octa-Soligen^{®} Manganese 10 oder aber auch Zirkoniumoctoate unter dem Handelsnamen Octa-Soligen^{®} Zirkonium 18 der Firma BORCHERS^{®}. Mangan (AKDRY Mn Octoate 6%) und Zirkoniumoctoat sind auch von der Firma AMERICAN ELEMENTS^{®} erhältlich. Calciumoctoate sind auch von der Firma PATCHEM^{®} LTD unter dem Handelsnamen Calcium Octoate 10% erhältlich. Des Weiteren können Sikkative auf Basis von Barium, Cer, Lithium, oder Strontium eingesetzt werden. Es stehen heutzutage auch moderne Trockenstoffe auf Basis von Metallseifen verschiedener Carbonsäuren zur Verfügung. Basierend auf der 2-Ethylhexansäure zum Beispiel von der Firma BORCHERS^{®} unter dem Handelsnamen Octa-Soligen^{®} 203.

Sollte die Trocknung zu schnell von statten gehen, werden sogenannte Hautverhinderungsmittel auf Basis von zum Beispiel Ketoximen, substituierten Phenolen oder aber Aldoximen zugegeben. Diese bilden mit den Sikkativen reversible Komplexe. Oxime sind zum Beispiel von der Firma BODO MÖLLER^{®} CHEMIE unter den Handelsnamen Dura^{®} MEKO oder Duroxim P oder aber von der Firma FISHER SCIENTIFIC^{®} unter dem Handelsnamen Alfa Aesar^{®} 2 Butanonoxim erhältlich.

Jedoch ist immer eine Verdünnung mit einem geeigneten organischen Lösungsmittel notwendig, um eine gute Verarbeitbarkeit zu gewährleisten. Vorzugsweise wird in der erfindungsgemäßen Formulierung Xylol verwendet. Vorstellbar ist auch die Verwendung von aliphatischen Kohlenwasserstoffen.

Bei den 2K-Beschichtungssystemen enthält das filmbildende Polymer bevorzugt funktionelle Gruppen, welche mit einem isocyanathaltigen Härter, einem aminhaltigen Härter oder mit einem Katalysator reaktiv sind.

Vorzugsweise ist das filmbildende Polymer ausgewählt aus der Gruppe der hydroxyfunktionellen Acrylatpolymere, Polyesterpolymere, Polyurethanpolymere und/oder Polyetherpolymere, Polyoxypropylenamine, aminofunktionellen Acrylat-Polymere oder Polyesterpolymere sowie Polycarbamate, welche mit einem isocyanathaltigen Härter reagieren.

Typischerweise besitzen solche Polymere reaktive Hydroxy-Gruppen. Besonders bevorzugt werden Polymere mit mehreren hydroxyfunktionellen Gruppen eingesetzt. Hydroxyfunktionelle Acrylate sind u.a. von der Firma Allnex^{®} unter den Handelsnamen MACRYNAL^{®} oder SETALUX^{®} erhältlich. Beispiele für hydroxyfunktionelle Polyester sind unter anderem kommerziell erhältlich unter dem Markennamen DESMOPHEN^{®} oder SETAL^{®}. Verwendbare und kommerziell erhältliche hydroxyfunktionelle Polyether sind u.a. erhältlich unter dem Markennamen TERATHANE^{®} oder POLYMEG^{®}.

Vorzugsweise weist die geprüfte erfindungsgemäße 2K-Beschichtung einen Härter auf, der ausgewählt ist aus der Gruppe der aliphatischen oder cycloaliphatischen Isocyanate.

Beispiele für isocyanathaltige Härter sind monomere Isocyanate, polymere Isocyanate und Isocyanat-Prepolymere. Polyisocyanate werden gegenüber monomeren Isocyanaten aufgrund ihrer geringeren Toxizität bevorzugt. Beispiele für Polyisocyanate sind Isocyanurate, Uretdione und Biurete basierend auf Diphenylmethan Diisocyanat (MDI), Toluol Diisocyanat (TDI), Hexamethylen Diisocyanate (HDI) and Isophoron Diisocyanat (IPDI). Beispiele für kommerziell erhältliche Produkte sind unter dem Markennamen DESMODUR^{®} von Covestro oder VESTANAT von Evonik Industries. Bekannte Produkte sind DESMODUR^{®} N3200, DESMODUR^{®} N3300, DESMODUR^{®} N3600 DESMODUR^{®} N75, DESMODUR^{®} XP2580, DESMODUR^{®} Z4470, DESMODUR^{®} XP2565 and DESMODUR^{®} VL von Covestro. Weitere Beispiele sind VESTANAT^{®} HAT 2500 LV, VESTANAT^{®} HB 2640 LV oder VESTANAT^{®} T 1890E von Evonik Industries. Beispiele für Isocyanat-Prepolymere sind DESMODUR^{®} E XP 2863, DESMODUR^{®} XP 2599 oder DESMODUR^{®} XP 2406 von Covestro. Weitere dem Fachmann bekannte Isocyanat-Prepolymere können eingesetzt werden.

Es ist vorstellbar, Katalysatoren zur Aushärtung einzusetzen. Folgende Katalysatoren, ausgewählt aus organischen Sn(IV)-, Sn(II)-, Zn-, Bi-Verbindungen oder tertiären Aminen, können eingesetzt werden. Bevorzugt werden Katalysatoren ausgewählt aus der Gruppe der Organozinnkatalysatoren, Titanate oder Zirkonate, metallorganische Verbindungen des Aluminiums, Eisens, Calciums, Magnesiums, Zinks oder Bismuths, Lewis-Säuren oder organische Säuren/Basen, lineare oder zyklische Amidine, Guanidine oder Amine oder eine Mischung daraus eingesetzt.

Vorzugseise werden als Härtungs-Katalysatoren organische Zinnverbindungen, wie z.B. Dibutylzinndiacetylacetonat, Dibutylzinndiacetat, Dibutylzinndioctoat, oder Dioctylzinndilaurat, Dioctylzinndiacetylacetonat, Dioctylzinndiketanoat, Dioctylstannoxan, Dioctylzinnoxid, bevorzugt Dioctylzinndiacetylacetonat, Dioctylzinndilaurat, Dioctylzinndiketanoat, Dioctylstannoxan, Dioctylzinndicarboxylat, Dioctylzinnoxid, besonders bevorzugt Dioctylzinndicarboxylat und Dioctylzinndilaurat eingesetzt. Des Weiteren können auch Zinksalze wie Zinkoctoat, Zinkacetylacetonat und Zink-2-ethylcaproat, oder Tetraalkylammoniumverbindungen wie N,N,N-Trimethyl-N-2-hydroxypropyl-ammonium-hydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt ist Zinkoctoat. Weiter bevorzugt sind Bismutkatalysatoren, z.B. TIB Kat (TIB Mannheim) oder Borchi^{®}-Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Calciumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc.. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren bevorzugt. Weiter bevorzugt sind Guanidin-Gruppen tragende organische und Silicium-organische Verbindungen. Selbstverständlich können auch Kombinationen mehrerer Katalysatoren eingesetzt werden. Darüber hinaus können auch photolatente Basen als Katalysatoren verwendet werden, wie sie in der WO 2005/100482 beschrieben sind.

Der Härtungskatalysator wird vorzugsweise in Mengen von 0,01 bis 5,0 Gew.-%, bevorzugt 0,05 bis 4,0 Gew.-% und besonders bevorzugt 0,1 bis 3 Gew.-% bezogen auf die Gesamtmasse der härtbaren Zusammensetzung eingesetzt.

Auch kann die Verwendung von Lösungsmitteln sinnvoll sein. Die Lösungsmittel können dabei beispielsweise der Erniedrigung der Viskosität des unvernetzten Bindemittels dienen oder das Aufziehen auf die Oberfläche begünstigen. Als Lösungsmittel kommen prinzipiell sämtliche Lösungsmittel sowie Lösemittelmischungen in Betracht. Die Wahl eines geeigneten Lösungsmittels kann dabei erfolgen aus der Gruppe der Alkane, Alkene, Alkine, Benzol und Aromaten mit aliphatischen und aromatischen Substituenten, Carbonsäureester, lineare und cyclische Ether und bei hohen Drücken auch Kohlenstoffdioxid, halogenierte aliphatische oder aromatische Kohlenwasserstoffe, Ketone oder Aldehyde, Lactone (γ-Butyrolacton), Lactame (z.B. N-Methyl-2-pyrrolidon), Nitrile, Nitroverbindungen, tertiäre Carbonsäureamide (Dimethylformamid), Harnstoffderivate wie Tetramethylharnstoff oder Dimethylpropylen-harnstoff (DMPU), Sulfoxide wie Dimethylsulfoxid (DMSO), Sulfone wie Sulfolan, Kohlensäureester wie Dimethylcarbonat oder Ethylencarbonat. Auch seien protische Lösungsmittel genannt wie Wasser, Methanol, Ethanol, n- und Isopropanol und andere Alkohole, primäre und sekundäre Amine, Carbonsäuren und deren Ester wie auch Anhydride, primäre und sekundäre Amide wie Formamid. Bevorzugt sind im Bereich der Coatinganwendungen akzeptierte Lösungsmittel wie Ether z.B. t-Butyl-methylether, Ester, wie z.B. Ethylacetat oder n-Butylacetat, tert-Butylacetat oder Diethylcarbonat sowie Alkohole, wie z.B. Ethanol und die verschiedenen Regioisomeren des Propanols und Butanols. Weiterhin sind bevorzugte Lösungsmittel aromatische und/oder aliphatische Lösemittel wie Benzol, Toluol oder Napthaschnitte.

Bei Bedarf können außerdem eine oder mehrere Substanzen zugefügt werden, ausgewählt aus der Gruppe umfassend Co-Vernetzer, Flammschutzmittel, Entlüfter, Härter, antimikrobielle und konservierende Stoffe, Farbstoffe, Färbemittel und Pigmente, Frostschutzmittel, Fungizide, Sprühhilfsmittel, Netzmittel, Duftstoffe, Lichtschutzmittel, Radikalfänger, UV-Absorber und Stabilisatoren, insbesondere Stabilisatoren gegen thermische und/oder chemische Belastungen und/oder Belastungen durch ultraviolettes und sichtbares Licht.

UV-Stabilisatoren sind bevorzugt bekannte Produkte auf Basis gehinderter phenolischer Systeme oder Benzotriazole. Als Licht-Stabilisatoren können z. B. sogenannte HALS-Amine eingesetzt werden. Als Stabilisatoren können z. B. die dem Fachmann bekannten Produkte oder Produktkombinationen aus z.B. Tinuvin^{®}-Stabilisatoren (BASF), wie z. B. Tinuvin^{®}-Stabilisatoren (BASF), beispielsweise Tinuvin^{®} 1130, Tinuvin^{®} 292 oder auch Tinuvin^{®} 400, bevorzugt Tinuvin^{®} 1130 in Kombination mit Tinuvin^{®} 292 eingesetzt werden. Ihre Einsatzmenge richtet sich nach dem Grad der erforderlichen Stabilisierung.

Für die Farbgebung bei Beschichtungen eignen sich Pigmente auf Basis von Titandioxid und anderen Weißpigmenten, Anorganischen Farbpigmenten, wie z.B. Eisenoxide, Chrompigmente, Ultramarinpigmente, Organischen Farbpigmentne wie Azopigmenten, Phthalocyaninpigmenten, Perylenpigmenten, Quinacridonpigmenten, darüber hinaus Ruße. Für die Verbesserung des Korrosionsschutzes kommen noch die typischen Korrosionsschutzpigmenten, wie z.B. Zinkphoshat zum Einsatz.

Füllstoffe sind bevorzugt gefällte oder gemahlene Kreide, anorganische Carbonate im allgemeinen, gefällte oder gemahlene Silikate, gefällte oder pyrogene Kieselsäuren, Glaspulver, Glashohlkugeln (sog. Bubbles), Metalloxide, wie z.B. TiO₂, Al₂O₃, natürliche oder gefällte Bariumsulfate, Quarzmehle, Sand, Aluminiumtrihydrate, Talkum, Glimmer, Christobalitmehle, verstärkende Fasern, wie Glasfasern oder Kohlefasern, lang oder kurzfaserige Wollastonite, Kork, Ruß oder Graphit. Vorteilhaft können hydrophobierte Füllstoffe eingesetzt werden, da diese Produkte einen geringeren Wassereintrag aufweisen und die Lagerstabilität der Formulierungen verbessern.

Es ist auch vorstellbar, die erfindungsgemäßen Haftvermittler und Haftvermittlerzusammensetzungen in UV-härtenden Formulierungen einzusetzen. Hier findet die Härtung durch radikalische Polymerisation statt.

Vorzugsweise sind die filmbildenden Polymere ausgewählt aus der Gruppe der Acrylate und Methacrylate. Es wird in den meisten Fällen eine Mischung aus zum Beispiel einem Polyetheracrylat der Firma BASF mit dem Handelsnamen Laromer LR 8945^{®} und einem Polyesteracrylat der Firma BASF^{®} mit dem Handelsnamen Laromer LR8799 oder Laromer LR8800 verwendet.

Als reaktive Lösungsmittel kommen Hexadioldiacrylat oder Trimethylolpropantriacrylat in Frage.

Die folgenden Beispiele dienen dem Fachmann allein zur Erläuterung dieser Erfindung und stellen keinerlei Beschränkung des beanspruchten Gegenstands oder des beanspruchten Verfahrens dar.

### I. Herstellungsbeispiele

### Allgemeine Methoden

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) wurden unter den folgenden Messbedingungen durchgeführt: Säulenkombination SDV 1000/10000 A (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung des Gehalts an Epoxidgruppen im Polybutadien (Epoxidgehalt, Epoxidierungsgrad):

Die Bestimmung des Gehalts an Epoxidgruppen erfolgte mit Hilfe der ¹³C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen Wiederholungseinheiten. Dies entspricht der Anzahl der Epoxidgruppen des epoxidierten Polybutadiens dividiert durch die Anzahl der Doppelbindungen des eingesetzten Polybutadiens.

### Bestimmung der Säurezahl:

Die Säurezahlbestimmung wurde nach einem Titrationsverfahren in Anlehnung an die DIN EN ISO 2114 durchgeführt.

### Herstellung des erfindungsgemäßen Haftvermittlers

Angelehnt an die noch unveröffentlichte europäische Patentanmeldung EP 19212066.5 bzw. PCT/EP2020/083013 1.1, wurden die Schritte a) - c) durchgeführt. Exemplarisch wird jeweils das erste Beispiel bzgl. der Einwaage der Komponente beschrieben. Die eingesetzten Einwaagen und Parameter der Zwichenprodukte und Entprodukte sind den jeweiligen Tabellen zu entnehmen.

### Schritt a) Herstellung epoxidierter Polybutadiene

Zur Herstellung eines epoxidierten Polybutadiens wurde ein Polybutadien der Marke Polyvest^{®} 110 (Fa. Evonik) mit der Struktur x=1%, y=24% und z=75% eingesetzt.

### Exemplarisch für Beispiel A1:

Es wurde in einem 5L-Vielhalsglaskolben unter einer Stickstoffatmosphäre 1500 g Polyvest^{®} 110 und 81,0 g konz. Ameisensäure in 1500 g Chloroform bei Raumtemperatur vorgelegt. Anschließend wurden 300 g 30%-ige H₂O₂-Lösung (30 Gew.-% HzOz bezogen auf die Gesamtmasse der wässrigen Lösung) langsam zugetropft und die Lösung dann für 5,5 Stunden auf 50 °C erhitzt. Nach Ende der Reaktion wurde auf Raumtemperatur abgekühlt, die organische Phase abgetrennt und diese noch viermal mit dest. H₂O gewaschen. Überschüssiges Chloroform und restliches Wasser wurden abdestilliert. Es wurden 1440 g des Produktes erhalten, welches mit 1000 ppm Irganox^{®} 1135 versetzt und unter Stickstoff gelagert wurde.

Die Auswertung mittels ¹³C-NMR ergab einen Epoxidierungsgrad von ca. 8,5% der Doppelbindungen. M_{w}=4597 g/mol ; Mₙ=1999 g/mol ; M_{w}/Mₙ = 2,3

Für die anderen Beispiele A2 - A4: die Einwaage, Reaktionsbedingungen und Auswertungen können der Tabelle 1 entnehmen. Zur besseren Lesart wurde die Bezeichnung der Beispiele A1 - A4 für Tabelle 2 beibehalten.

**Tabelle 1: Epoxidiertes Polybutadien**

| | **Polybutadien [g]** | **konz. Ameisensäure [g]** | **CHCl₃ [g]** | **30% H₂O₂-Lsg. [g]** | **t [h]** | **Mₙ [g/mol]** | **M_{w} [g/mol]** | **M_{w}/Mₙ** | **Epoxidierungsgrad [%]** | **Ausbeute [g]** |
|---|---|---|---|---|---|---|---|---|---|---|
| **A1** | 1500 | 81,0 | 1500 | 300 | 5,5 | 1999 | 4597 | 2,3 | 8,5 | 1440 |
| **A2** | 1500 | 81,0 | 1500 | 300 | 7 | 2001 | 4620 | 2,4 | 8,5 | 1425 |
| **A3** | 800 | 43,2 | 800 | 160 | 9,5 | 1992 | 4582 | 2,3 | 8,3 | 767 |
| **A4** | 800 | 43,2 | 800 | 160 | 10 | 2011 | 4625 | 2,3 | 8,4 | 756 |

### Schritt b) Herstellung hydroxyfunktioneller Polybutadiene

Zur Herstellung eines hydroxylierten Polybutadiens wurde das epoxidierte Polybutadien A1 aus Schritt a) eingesetzt. Der Hydroxylierungsgrad ist dabei die Anzahl der OH-Gruppen des hydroxyfunktionellen Polybutadiens dividiert durch die Anzahl der Doppelbindungen des in Schritt a) eingesetzten Polybutadiens. Zur Herstellung wurden in einem 5 L-Vierhalskolben unter einer Stickstoffatmosphäre 1400 g des epoxidierten Polybutadiens in 1400 g iso-Butanol vorgelegt und unter Rühren mit 80wppm Trifluormethansulfonsäure (bezogen auf Masse epoxidiertes Polybutadien). Anschließend wurde auf 70°C erhitzt und das Gemisch für 6 Stunden bei dieser Temperatur gerührt. Während der Reaktion klart das Reaktionsgemisch auf. Nach beendeter Reaktion wurde auf Raumtempertaur abgekühlt und die Lösung durch Zugabe von 21,4 g ges. NaHCOs-Lsg. neutralisiert. Es wurde auf 115 °C erhitzt und überschüssiges Wasser sowie der überschüssige Alkohol wurden i.Vak. abdestilliert. Der durch Destillation zurück gewonnene und ggf. getrocknete Alkohol kann bei Folgesynthesen wieder eingesetzt werden. Die Trocknung des abdest. iso-Butanols kann z.B. destillativ oder durch Zusatz von Trocknungsmitteln wie z.B. Molsieben geschehen. Es wurden 1455 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen, woraus sich ein Hydroxylierungsgrad von ca. 8,5% ergibt.
M_{w}=6228 g/mol ; Mₙ=2196 g/mol ; M_{w}/Mₙ= 2,8

Analog wurde der Schritt auch für die anderen Beispiele durchgeführt, siehe Tabelle 2.

**Tabelle 2: hydroxyfunktionelles Polybutadien**

| | **Epoxidiertes Polybutadien aus Tabelle 1 [g]** | **iso-Butanol [g]** | **ges. NaHCO₃**-**Lsg. [g]** | **t [h]** | **Mₙ [g/mol]** | **M_{w} [g/mol]** | **M_{w}/Mₙ** | **Hydroxylierungsgrad [%]** | **Ausbeute [g]** |
|---|---|---|---|---|---|---|---|---|---|
| **A1** | 1400 | 1400 | 21,4 | 6 | 2196 | 6228 | 2,8 | 8,5 | 1455 |
| **A2** | 1400 | 1400 | 21,4 | 4,5 | 2203 | 6080 | 2,8 | 8,5 | 1467 |
| **A3** | 720 | 720 | 11,0 | 5 | 2325 | 7551 | 3,2 | 8,3 | 752 |
| **A4** | 700 | 700 | 10,7 | 6 | 2313 | 7898 | 3,4 | 8,4 | 726 |

### Schritt c) Herstellung des erfindungsgemäßen Haftvermittlers mittels Alkoxylierung des hydroxyfunktionellen Polybutadiens

In einem 3 Liter Autoklaven wurden 334,0 g des hydroxyfunktionellen Polybutadiens A1 aus Schritt b) und 19,2 g 30%-iger Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Ein Gemisch aus 462 g Ethylenoxid (EO) sowie 351 g Propylenoxid (PO) wurden kontinuierlich und unter Kühlen in 9 h bei 115 °C und max. 3,5 bar Reaktorinnendruck (absolut) zudosiert. An die 30 minütige Nachreaktion bei 115 °C schloss sich die Entgasung an. Flüchtige Anteile wie restliches Ethylenoxid und Propylenoxid wurden im Vakuum abdestilliert. Das Produkt wurde auf 95 °C abgekühlt, mit 30%-iger H₃PO₄ auf eine Säurezahl von 0,1 mg KOH/g neutralisiert und mit 1000 ppm Irganox^{®} 1135 versetzt. Wasser wurde in einer Vakuumdestillation entfernt und ausgefallene Salze abfiltriert. Es wurden 1076 g des mittelviskosen und orange-farbenen, klaren alkoxylierten Polybutadiens isoliert und unter Stickstoff gelagert.
M_{w}=13.481 g/mol ; Mₙ=3209 g/mol ; M_{w}/Mₙ= 4,2

Analog wurden weitere erfindungsgemäße Haftvermittler und Vergleichsbeispiel gemäß Tabelle 3 mit den aufgeführten Einwaagen und Reaktionsbedingungen durchgeführt. Die Alkoxylierungsmodifikationen sind aus der Spalte "Dosageprofil" ersichtlich.

**Tabelle 3. Erfindungsgemäßer Haftvermittler und Vergleichsbeispiel**

| **Haftvermittler** | **Hyroxyfunktionell es Polybutadien [g] aus Tabelle 2** | **Dosageprofil** | **t [h]** | **Kat. [g]** | **Mₙ [g/mol]** | **M_{W} [g/mol]** | **M_{w}/Mₙ** | **SZ [mg KOH/g]** | **Ausbeute [g]** | **Aggregatzustand** |
|---|---|---|---|---|---|---|---|---|---|---|
| **HA1** | 532 des A1 | 586 g PO | 8 | 30,3 | 3233 | 13.650 | 4,5 | 0,1 | 1062 | flüssig |
| **HA2** | 555 des A2 | 232 g EO / 306 g PO | 6,5 | 31,6 | 3209 | 13.481 | 4,2 | 0,1 | 1013 | flüssig |
| **HA3** | 627 des A3 | 520 g PO / 920 g EO | 10 | 35,8 | 4373 | 18.940 | 4,3 | 0,1 | 7269 | flüssig |
| **HA4** | 303 des A4 | 835 g PO | 9 | 17,3 | 2999 | 20.638 | 6,88 | 0,1 | 1052 | flüssig |
| **VGA2** | 596 des A2 | 498 g EO | 3,5 | 33,9 | 3025 | 10.180 | 3,4 | 0,1 | 1030 | fest |

### II. Anwendungstechnische Beispiele

### Allgemeine Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Geräte

Speedmixer, Firma Hauschild Engineering Modell FAC 150.1 FVZ
Trockenofen, Firma Binder, Gerätetyp FDL 115 E2
Dispermat, Firma Getzmann Gerätetyp CV2-SIP
Gitterschnitttester, DIN EN ISO 2409, Gitterschnittschablonen Set CCP
Cuttermesser, Firma HEYCO Modell 01664000000
Klebeband, Firma TESA 4651
Laborwaage, Sartorius MSE 6202 S 100 DO
Spiralrakel, Firma BYK Gardner, 100µm

### Methoden

### Haftungsprüfung

Für eine optimale Prüfung der Haftleistung von Haftvermittlern hat sich bewährt, zunächst eine Vorprüfung mittels des Andreas-Cut Tests durchzuführen. Wird eine Probe mit einer 1 (keinerlei Abplatzungen) bewertet, kommt sie dann zur Gitterschnittprüfung nach DIN EN ISO 2409. Somit kann Zeit und Aufwand minimiert werden. Manchmal ist es auch ausreichend, nur den Wert aus der Andreas Cut Text heranzuziehen.

### a) Vorprüfung mit dem Andreas Cut Test

Mit einem Cuttermesser werden entlang eines Lineals zwei Ritze mit 90° zueinander und einer jeweiligen Länge von 3 bis 4 cm in die Beschichtung bis zum Untergrund durchgeschnitten. Bei Kunststoffsubstraten ist darauf zu achten, das Substrat möglichst nicht mitzuschneiden. Anschließend wird die angeritzte Stelle mit einem TESA Klebeband 4651 abgeklebt, festgedrückt und dann abgezogen. Es wird wie folgt bewertet:

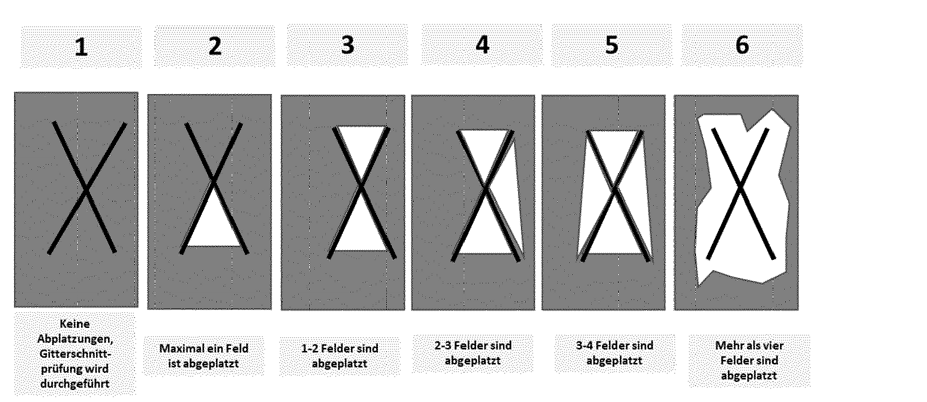

### b) Gitterschnittprüfung wird gemäß DIN EN ISO 2409 durchgeführt.

**Die Kompatibilitätsprüfung** wird mittels einer visuellen Beurteilung des Lackfilms anhand der Skala (Tabelle 4) ermittelt. **Tabelle 4: Skala der visuellen Beurteilung des Lackfilms:**

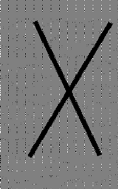

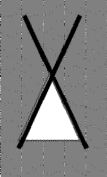

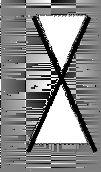

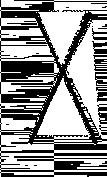

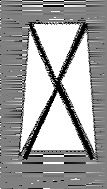

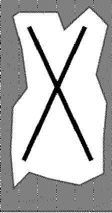

| | **Aussehen / Merkmale** |
|---|---|
| 1 | klar |
| 2 | Leicht trüb |
| 3 | Leicht trüb und oder Stippen |
| 4 | Trüb, Stippen und/oder Pinholes |
| 5 | Sehr trüb und/oder Krater, Stippen, Pinholes, Benetzungsstörung |

### Materialien

**Tabelle 5: Rohstoffe für die Lackformulierungen**

| **Handelsname** | **Chemische Beschreibung** | **Verwendungszweck** | **Unternehmen** |
|---|---|---|---|
| Macrynal^{®} SM 510/60 LG | Hydroxyfunktionelles Polyacrylat | Filmbildendes Polymer | Fa. Allnes |
| Setal^{®} 1603 | Hydroxylgruppenhaltiger Polyester | Filmbildendes Polymer | Fa. Allnex |
| Desmodur^{®} N 3200 | Polyisocyanat | Härter | Fa. Covestro |
| Desmodur^{®} N 3600 | Polyisocyanat | Härter | Fa. Covestro |
| Butylacetat | Butylacetat | Lösemittel | Fa. Sigma-Aldrich |
| Butyldiglocolacetat | Butyldiglocolacetat | Lösemittel | |
| Solvesso 100 | Aromatischer Kohlenwasserstoff im Destillationsbereich 166°C-181°C | Lösemittel | Brenntag |
| Hydrosol A 170 | Aromatischer Kohlenwasserstoff | Lösemittel | DHC Solvent Chemie GmbH |
| Xylol | Isomeren Gemisch aromatischer Kohlenwasserstoffe | Lösemittel | Fa. Sigma-Aldrich |
| Methoxypropylacetat | Carbonsäureester | Lösemittel | Fa. Sigma-Aldrich |
| TIB KAT^{®} 318 | Dioctylzinn Dicarboxylat | Katalysator | TIB Chemicals AG |
| TIB KAT^{®} 218 | Dibutylzinndilaurat | Katalysator | TIB Chemicals AG |
| TEGO^{®} Flow 300 | Acrylathaltiges Polymer | Verlaufsadditiv | Fa. Evonik |
| TEGO^{®} Airex 990 | Entschäumer / Entlüfter | Entschäumer / Entlüfter | Fa. Evonik |

### Herstellung der Lackformulierungen

Für die anwendungstechnischen Prüfungen wurden zunächst zwei Lackformulierungen E1 und E2 entsprechend den Bestandteilen und Mengenangaben aus Tabelle 6 hergestellt.

### Lackformulierung E1:

Die Bestandteile (P1+P5 bis P7, P10+P11 und P13+P14), ohne den Härter (P4), mit den in Tabelle 6 aufgeführten Mengen wurden auf 2 kg hochgerechnet. Zunächst wurde P1 in einer Blechdose mit einem 2,5L Fassungsvolumen gewogen. Die Positionen P5 bis P7 und P10 bis P13 wurden nacheinander unter Rühren zugegeben. Die Mischung wurde unter dem Dispermat der Firma Getzmann, Gerätetyp CV2-SIP, einer Dispergierscheibe mit einem Durchmesser von 8cm und einer Umdrehungsgeschwindigkeit von 500upm hergestellt und nach Zugabe der letzten Position für weitere 20 Minuten gerührt. Es wurde darauf zu achten, dass keine Schlieren mehr zu sehen waren.

### Lackformulierung E2:

Für die Lackformulierung E2 wurden alle Bestandteile (P2+P6, P8+P9 und P12+P14) außer dem Härter (P3) mit den in Tabelle 3 aufgeführten Mengen auf 2kg hochgerechnet und in einer Blechdose mit einem 2,5L Fassungsvolumen gewogen. Die Mischung wurde mit einem Dispermat der Firma Getzmann, Gerätetyp CV2-SIP mit einer Dispergierscheibe mit einem Durchmesser von 8cm und einer Umdrehungsgeschwindigkeit von 500upm gerührt. Zunächst wird das Bindemittel (P2) vorgelegt, alle weiteren Bestandteile (P6 + P8 + P9 + P12 +P14) wurden unter Rühren zugegeben. Nach Zugabe der letzten Position wurde für weitere 20 Minuten gerührt.
1) Vorbereitung der Lackformulierungen für die anwendungstechnischen Prüfungen

Die erfindungsgemäßen Haftvermittler HA1 - HA4, Vergleichsbeispiele VGA2 und PV 110 (Polyvest^{®} 110) wurden zu je 5 Gew.-% bezogen auf den jeweiligen Festkörpergehalt (E1 = 57,5 Gew.-%; E2 = 56,3 Gew.-%) zugegeben. Als Nullreferenz diente die Lackformulierung E1 oder E2 ohne Haftvermittlerzusatz.

Zur Einarbeitung der erfindungsgemäßen Haftvermittler HA1 - HA4, Vergleichsbeispiele VGA2 und PV 110 wurden jeweils 20g der Lackformulierungen E1 und E2 (bei den 2K Systemen inklusive Härter) in eine 50 ml PP Schraubdose (Dürrmann GmbH & Co KG, 85664 Hohenlinden) gewogen und mittels Speedmixers für zwei Minuten bei 2000 Umdrehungen pro Minute (Fa. Hauschild Engineering, Typ DAC 150 FVZ) gemischt. Die vorbereiteten Lackformulierungen wurden dann mit einem 100µm Spiralrakel auf verschiedenen Substraten appliziert, so dass im getrockneten Zustand eine Trockenschichtdicke von ca. 40 µm erzielt wurde. E1 wurde jeweils auf Glas, Metzler Acrylnitril-Butadien-Styrol (ABS) und Aluminium A36 Q-Panel appliziert. E2 wurde auf Stahl A36 Q-Panels appliziert. Die applizierten Substrate wurden bei Raumtemperatur (23°C) über Nacht und anschließend 2 Tage bei 60°C getrocknet bzw. gehärtet.

**Tabelle 6: Zusammensetzung von jeweils 100 g der Lackformulierungen**

| **Position P** | **Rohstoffe [g]** | **E1** | **E2** |
|---|---|---|---|
| 1 | Macrynal^{®} SM 510/60 LG | 60,1 | |
| 2 | Setal^{®} 1603 | | 55,7 |
| 3 | Desmodur^{®} N 3600 | | 30,6 |
| 4 | Desmodur^{®} N 3200 | 21,3 | |
| 5 | Methoxypropylacetat | 4,6 | |
| 6 | Butylacetat | 5,5 | 11,1 |
| 7 | Solvesso 100 | 3,4 | |
| 8 | Hydrosol A 170 | | 1,1 |
| 9 | Butyldiglykolacetat | | 1,1 |
| 10 | Xylol | 4,2 | |
| 11 | TIB KAT^{®} 318 | 0,3 | |
| 12 | TIB KAT^{®} 218 | | 0,3 |
| 13 | TEGO^{®} Flow 300 | 0,5 | |
| 14 | TEGO^{®} Airex 990 | 0,1 | 0,1 |

Die Ergebnisse sind aus den nachfolgenden Tabellen zu entnehmen.

**Tabelle 7: Lackformulierung E1 auf Glas**

| **Beispiele** | **Chemische Modifikation** | **Haftung** | **Kompatibilität** |
|---|---|---|---|
| | | Andreas Cut / Gitterschnitt | |
| | EO/PO (Masse) | | |
| E1 | | 6 | 1 |
| PV 110 | | 6 | 4 |
| VGA2 | 498g / 0 | 6 | 1 |
| HA2 | 332g / 306g | 2 | 1 |
| HA3 | 520g / 920g | 2 | 1 |

Die Lackformulierung E1 als Nullreferenz zeigte wie erwartet keine Haftung auf Glas, ebenso die beiden Vergleichsbeispiele PV 110 und VGA2. Zudem war der Lackfilm bei dem PV 110 trüb und wies Stippen und/oder Pinholes auf.

Die Lackformulierungen mit den erfindungsgemäßen Haftvermittlern HA2 und HA3 zeigten eine gute Haftung auf Glas mit einer sehr guten Verträglichkeit. Da der Andreas-Cut Text "nur" eine 2 aufwies, wurde auf die Gitterschnittprüfung verzichtet. Überraschenderweise konnte festgestellt werden, dass die Haftwirkung durch die Alkoxylierung mit zusätzlich mindestes einer PO-Einheit deutlich verbessert werden konnte.

**Tabelle 8: Lackformulierung E1 auf ABS**

| **Produkte** | **Chemiscne Modifikation** | **Haftung** | **Kompatibilität** | |
|---|---|---|---|---|
| | | Andreas Cut / Gitterschnitt | | |
| | EO/PO (Masse) | | | |
| E1 | | 6 | 1 | |
| PV 110 | | 6 | 4 | |
| VGA2 | 498g / 0 | 6 | 1 | |
| HA2 | 332g / 306g | 4 | 1 | |
| HA3 | 520g / 920g | 4 | 1 | |

Auf ABS ergab sich ein ähnliches Bewertungsbild wie bei Glas.

**Tabelle 9: Lackformulierung E1 auf Aluminium A36 Q-Panel:**

| **Produkte** | **Chemische Modifikation** | **Haftung** | **Kompatibilität** |
|---|---|---|---|
| | | Andreas Cut / Gitterschnitt | |
| | EO/PO (Masse) | | |
| E2 | | 6 | 1 |
| PV 110 | | 5 | 4 |
| HA1 | 0 / 586g | 5 | 2 |
| HA2 | 332g / 306g | 3 | 1 |

Auf Aluminiumsubstrat waren auch die Lackformulierungen mit den erfindungsgemäßen Haftvermittlern in mindestens einer Eigenschaft, besonders in der Kompatibilität, deutlich besser als die des Vergleichsbeispiels.

**Tabelle 10: Lackformulierung E2 auf Stahl S36 Q-Panel**

| **Produkte** | **Chemische Modifikation** | **Haftung** | **Kompatibilität** |
|---|---|---|---|
| | | Andreas Cut / Gitterschnitt | |
| | EO/PO (Masse) | | |
| E3 | | 5 | 1 |
| PV 110 | | 5 | 5 |
| HA1 | 0 / 586g | 3 | 3 |
| HA4 | 0 / 835g | 1 / GT3 | 4 |

Die Lackformulierungen E2 mit den erfindungsgemäßen Haftvermittlern zeigten deutlich eine Verbesserung in der Haftung und Kompatibilität.

Die Beispiele zeigten völlig unerwartet den universellen Einsatz der erfindungsgemäßen Haftvermittler.

## Patentansprüche

1. Universeller Haftvermittler umfassend eine Verbindung auf Basis von Polybutadien mit mindestens einer Wiederholungseinheit ausgewählt aus der Gruppe bestehend aus den zweibindigen Resten 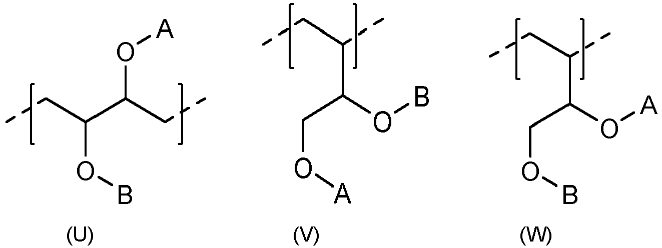 wobei
A jeweils unabhängig voneinander ein einbindiger organischer Rest oder ein Wasserstoffrest ist,
bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
B jeweils unabhängig voneinander ausgewählt ist aus der Gruppe bestehend aus Resten der Formel (4a), 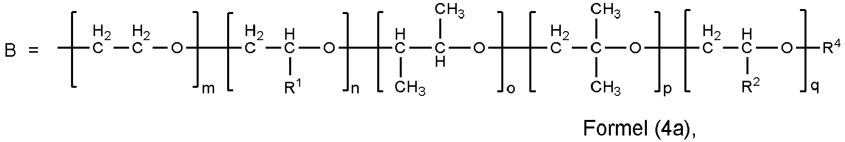 bevorzugt jeweils unabhängig voneinander ausgewählt ist aus der Gruppe bestehend aus Resten der Formel (4b), 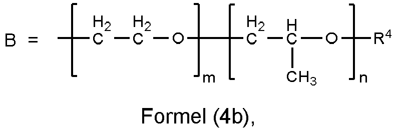 besonders bevorzugt jeweils unabhängig voneinander ausgewählt ist aus der Gruppe bestehend aus Resten der Formel (4c), 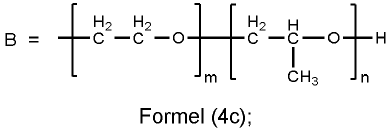
R¹ jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
R² ein Rest der Formel -CH₂-O-R³ ist;
R³ jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist;
besonders bevorzugt ein tert-Butylphenylrest oder ein o-Kresylrest ist;
R⁴ jeweils unabhängig voneinander ein einbindiger organischer Rest mit 1 bis 18 Kohlenstoffatomen oder Wasserstoff, bevorzugt Wasserstoff ist;
und
m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist;
dass Rest B mindestens eine Wiederholungseinheit gemäß 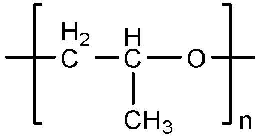
aufweist;
und jede Permutation der Wiederholungseinheiten im Rest B mitumfasst ist.

2. Haftvermittler nach Anspruch 1, **dadurch gekennzeichnet, dass** m, n, o, p und q jeweils unabhängig voneinander 0 bis 100, bevorzugt 0 bis 70, besonders bevorzugt 0 bis 50 betragen, mit der Maßgabe, dass die Summe aus m, n, o, p und q größer als 1, bevorzugt größer als 5, besonders bevorzugt größer als 10 ist.

3. Haftvermittler nach einem der vorgenannten Ansprüche, **dadurch gekennzeichnet, dass** die zahlenmittlere Molmasse Mₙ des Polybutadienteils, bestimmt nach der in der Beschreibung angegebenen Methode, von 200 g/mol bis 20000 g/mol, bevorzugt von 500 g/mol bis 10000 g/mol, besonders bevorzugt von 700 g/mol bis 5000 g/mol beträgt.

4. Haftvermittler nach einem der vorgenannten Ansprüche, **dadurch gekennzeichnet, dass** der Polybutadienteil 0 % bis 80 %, bevorzugt 0 % bis 30 %, besonders bevorzugt 0 % bis 10 %, ganz besonders bevorzugt 0 % bis 5 % der enthaltenen Doppelbindungen 1,2-Vinyl-Doppelbindungen aufweist und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen.

5. Haftvermittler nach einem der vorgenannten Ansprüche, **dadurch gekennzeichnet, dass** die mittlere Molmasse des Rests B, bestimmt nach der in der Beschreibung angegebenen Methode, von 100 g/mol bis 10000 g/mol, bevorzugt von 200 g/mol bis 7500 g/mol, besonders bevorzugt von 400 g/mol bis 5000 g/mol beträgt.

6. Haftvermittler nach einem der vorgenannten Ansprüche, **dadurch gekennzeichnet, dass** die Verbindung auf Basis von linearen Polybutadienen hergestellt wurde.

7. Haftvermittler nach einem der vorgenannten Ansprüche, **dadurch gekennzeichnet, dass** die Verbindung keine seitständigen (kammständigen) Polybutadiene aufweist.

8. Haftvermittler nach einem der vorgenannten Ansprüche, **dadurch gekennzeichnet, dass** die Verbindung ausschließlich seitständige (kammständige) Wiederholungseinheiten (U), (V) und/oder (W) aufweist.

9. Verwendung des Haftvermittlers nach einem der vorgenannten Ansprüche zur Herstellung einer Haftvermittlerzusammensetzung.

10. Verwendung des Haftvermittlers nach einem der vorgenannten Ansprüche oder der Haftvermittlerzusammensetzung nach Anspruch 9 zur Herstellung von Beschichtungsstoffen, wie etwa Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen, Dicht- und Klebstoffzusammensetzungen.

11. Verfahren umfassend das Aufbringen einer härtbaren filmbildenden Zusammensetzung enthaltend eines Haftvermittlers nach einem der vorgenannten Ansprüche oder einer Haftvermittlerzusammensetzung nach Anspruch 9 auf ein Substrat.

12. Verfahren nach Anspruch 11, wobei das Substrat Metall, Beton, Holz, Glas, Kunststoff und/oder ein Kompositmaterial, wie z.B. Glasfaser und/oder Kohlenstofffaserverbundwerkstoff, ist.

## Claims

1. Universal adhesion promoter comprising a compound based on polybutadiene having at least one repeat unit selected from the group consisting of the divalent radicals 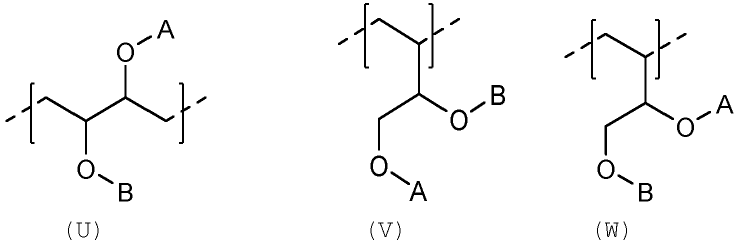 wherein
A is in each case independently a monovalent organic radical or a hydrogen radical,
preferably in each case independently selected from the group consisting of monovalent hydrocarbon radicals having 1 to 6 carbon atoms, more preferably in each case independently selected from the group consisting of alkyl radicals having 1 to 4 carbon atoms;
B is in each case independently selected from the group consisting of radicals of the formula (4a) 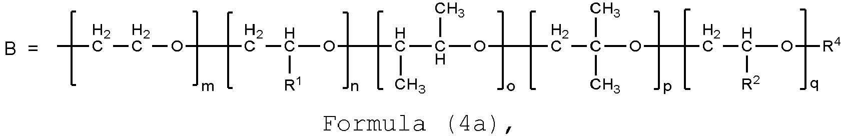 preferably in each case independently selected from the group consisting of radicals of the formula (4b) 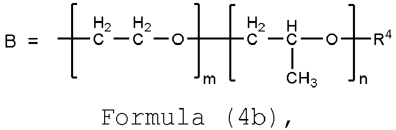 more preferably in each case independently selected from the group consisting of radicals of the formula (4c) 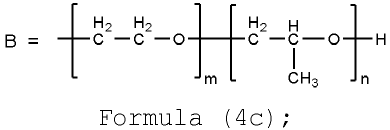
R¹ is in each case independently selected from the group consisting of monovalent hydrocarbon radicals having 1 to 16 carbon atoms,
preferably in each case independently an alkyl radical having 1 to 16 carbon atoms or a phenyl radical,
more preferably in each case independently a methyl radical, an ethyl radical or a phenyl radical;
R² is a radical of the formula -CH₂-O-R³;
R³ is in each case independently selected from the group consisting of monovalent hydrocarbon radicals having 3 to 18 carbon atoms;
preferably each independently an allyl radical, a butyl radical, an alkyl radical having 8 to 15 carbon atoms or a phenyl radical that may be substituted by monovalent radicals selected from hydrocarbon radicals having 1 to 4 carbon atoms;
more preferably a tert-butylphenyl radical or an o-cresyl radical;
R⁴ is each independently a monovalent organic radical having 1 to 18 carbon atoms or hydrogen, preferably hydrogen;
and
m, n, o, p and q are each independently 0 to 300, preferably 0 to 200, more preferably 0 to 100, with the proviso that the sum total of m, n, o, p and q is greater than 1, preferably greater than 5, more preferably greater than 10;
the radical B has at least one repeat unit in accordance with 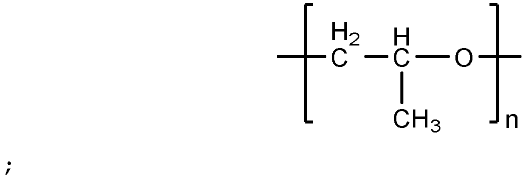
including every permutation of the repeat units in the radical B.

2. Adhesion promoter according to Claim 1, **characterized in that** m, n, o, p and q are each independently 0 to 100, preferably 0 to 70, more preferably 0 to 50, with the proviso that the sum total of m, n, o, p and q is greater than 1, preferably greater than 5, more preferably greater than 10.

3. Adhesion promoter according to either of the preceding claims, **characterized in that** the number-average molar mass Mₙ of the polybutadiene moiety, determined by the method specified in the description, is from 200 g/mol to 20 000 g/mol, preferably from 500 g/mol to 10 000 g/mol, more preferably from 700 g/mol to 5000 g/mol.

4. Adhesion promoter according to any of the preceding claims, **characterized in that** the polybutadiene moiety has 0% to 80%, preferably 0% to 30%, more preferably 0% to 10%, especially preferably 0% to 50 of the double bonds present as 1,2 vinyl double bonds, and 20% to 100%, preferably 70% to 100%, more preferably 90% to 100%, especially preferably 95% to 100% of the double bonds present as 1,4 double bonds.

5. Adhesion promoter according to any of the preceding claims, **characterized in that** the average molar mass of the radical B, determined by the method specified in the description, is from 100 g/mol to 10 000 g/mol, preferably from 200 g/mol to 7500 g/mol, more preferably from 400 g/mol to 5000 g/mol.

6. Adhesion promoter according to any of the preceding claims, **characterized in that** the compound was prepared based on linear polybutadienes.

7. Adhesion promoter according to any of the preceding claims, **characterized in that** the compound has no pendant (in comb position) polybutadienes.

8. Adhesion promoter according to any of the preceding claims, **characterized in that** the compound has exclusively pendant (in comb position) repeat units (U), (V) and/or (W).

9. Use of the adhesion promoter according to any of the preceding claims for preparing an adhesion promoter composition.

10. Use of the adhesion promoter according to any of the preceding claims or of the adhesion promoter composition according to Claim 9 for producing coating materials, such as dispersions, millbases, paints, coatings or printing inks, inkjet, grind resins, pigment concentrates, colour preparations, pigment preparations, filler preparations or coating compositions, sealant and adhesive compositions.

11. Process comprising applying a curable film-forming composition comprising an adhesion promoter according to any of the preceding claims or an adhesion promoter composition according to Claim 9 to a substrate.

12. Process according to Claim 11, wherein the substrate is metal, concrete, wood, glass, plastic and/or a composite material such as glass fibre and/or carbon fibre composite.

## Revendications

1. Promoteur d'adhérence universel comprenant un composé à base de polybutadiène comportant au moins un motif répétitif choisi dans le groupe consistant en les radicaux divalents 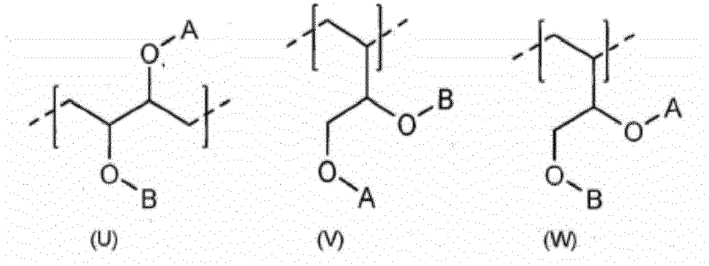 dans lequel
A représente chacun indépendamment des autres un radical organique monovalent ou un radical hydrogène,
de préférence est chacun choisi indépendamment des autres dans le groupe consistant en les radicaux hydrocarbonés monovalents ayant 1 à 6 atomes de carbone,
d'une manière particulièrement préférée est chacun indépendamment des autres choisi dans le groupe consistant en les radicaux alkyle ayant 1 à 4 atomes de carbone ;
B est chacun indépendamment des autres choisi dans le groupe consistant en les radicaux de Formule (4a), 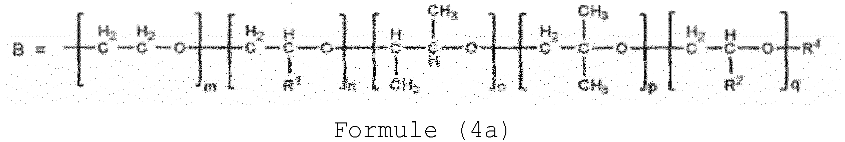
de préférence est chacun indépendamment des autres choisi dans le groupe consistant en les radicaux de Formule (4b), 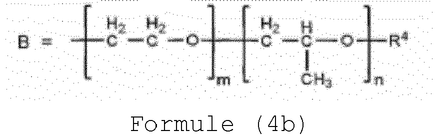
d'une manière particulièrement préférée est chacun choisi indépendamment des autres dans le groupe consistant en les radicaux de Formule (4c), 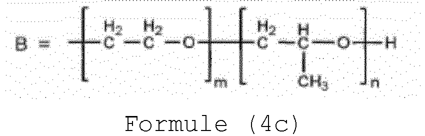
R¹ est chacun indépendamment des autres choisi dans le groupe consistant en les radicaux hydrocarbonés monovalents ayant 1 à 16 atomes de carbone,
de préférence représente chacun indépendamment des autres un radical alkyle ayant 1 à 16 atomes de carbone ou un radical phényle,
d'une manière particulièrement préférée représente chacun indépendamment des autres un radical méthyle, un radical éthyle ou un radical phényle ;
R² représente un radical de formule -CH₂-O-R³ ;
R³ est chacun indépendamment des autres choisi dans le groupe consistant en les radicaux hydrocarbonés monovalents ayant 3 à 18 atomes de carbone ;
de préférence représente chacun indépendamment des autres un radical allyle, un radical butyle, un radical alkyle ayant 8 à 15 atomes de carbone ou un radical phényle, qui peut être substitué par des radicaux monovalents choisis parmi les radicaux hydrocarbonés ayant 1 à 4 atomes de carbone ;
d'une manière particulièrement préférée représente un radical tert-butylphényle ou un radical o-crésyle ;
R⁴ représente chacun indépendamment des autres un radical organique monovalent ayant 1 à 18 atomes de carbone ou un hydrogène, de préférence un hydrogène ;
et
m, n, o, p et q représentent chacun indépendamment des autres 0 à 300, de préférence 0 à 200, d'une manière particulièrement préférée 0 à 100, à la condition que la somme de m, n, o, p et q soit supérieure à 1, de préférence supérieure à 5, d'une manière particulièrement préférée supérieure à 10 ;
que le radical B présente au moins un motif répétitif selon 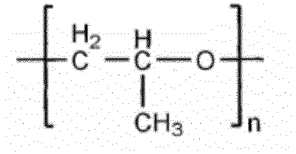
et que chaque permutation des motifs répétitifs existe aussi dans le radical B.

2. Promoteur d'adhérence selon la revendication 1, **caractérisé en ce que** m, n, o, p et q représentent chacun indépendamment des autres 0 à 100, de préférence 0 à 70, d'une manière particulièrement préférée 0 à 50, à la condition que la somme de m, n, o, p et q soit supérieure à 1, de préférence supérieure à 5, d'une manière particulièrement préférée supérieure à 10.

3. Promoteur d'adhérence selon l'une des revendications précédentes, **caractérisé en ce que** la masse moléculaire moyenne en nombre Mₙ de la partie polybutadiène, déterminée par la méthode présentée dans la description, est de 200 g/mol à 20 000 g/mol, de préférence de 500 g/mol à 10 000 g/mol, d'une manière particulièrement préférée de 700 g/mol à 5 000 g/mol.

4. Promoteur d'adhérence selon l'une des revendications précédentes, **caractérisé en ce que** la partie polybutadiène comprend 0 % à 80 %, de préférence 0 % à 30 %, d'une manière particulièrement préférée de 0 % à 10 %, d'une manière tout particulièrement préférée 0 % à 5 % des doubles liaisons présentes doubles liaisons 1,2-vinyle, et 20 % à 100 %, de préférence 70 % à 100 %, d'une manière particulièrement préférée 90 % à 100 %, d'une manière tout particulièrement préférée 95 % à 100 % des doubles liaisons présentes doubles liaisons en 1,4.

5. Promoteur d'adhérence selon l'une des revendications précédentes, **caractérisé en ce que** la masse moléculaire moyenne du radical B, déterminée par la méthode présentée dans la description, est de 100 g/mol à 10 000 g/mol, de préférence de 200 g/mol à 7 500 g/mol, d'une manière particulièrement préférée de 400 g/mol à 5 000 g/mol.

6. Promoteur d'adhérence selon l'une des revendications précédentes, **caractérisé en ce que** le composé a été fabriqué à partir de polybutadiènes linéaires.

7. Promoteur d'adhérence selon l'une des revendications précédentes, **caractérisé en ce que** le composé ne comprend aucun polybutadiène en position latérale (en peigne).

8. Promoteur d'adhérence selon l'une des revendications précédentes, **caractérisé en ce que** le composé comprend exclusivement des motifs répétitifs (U), (V) et/ou (W) latéraux (en peigne).

9. Utilisation du promoteur d'adhérence selon l'une des revendications précédentes pour fabriquer une composition promotrice d'adhérence.

10. Utilisation du promoteur d'adhérence selon l'une des revendications précédentes ou de la composition promotrice d'adhérence selon la revendication 9 pour fabriquer des substances de revêtement telles par exemple que des dispersions, des matières de broyage, des peintures, des vernis ou des encres d'imprimerie, des jets d'encre, des résines à broyer, des concentrés pigmentaires, des préparations colorées, des préparations pigmentaires, des préparations de charges ou des compositions de revêtement, des compositions d'étanchéité et adhésives.

11. Procédé comprenant l'application, sur un substrat, d'une composition filmogène durcissable contenant un promoteur d'adhérence selon l'une des revendications précédentes ou une composition promotrice d'adhérence selon la revendication 9.

12. Procédé selon la revendication 11, dans lequel le substrat est un métal, un béton, du bois, du verre, un plastique et/ou un matériau composite tel que par exemple un matériau composite de fibres de verre et/ou de fibres de carbone.
